# EUROPEAN PATENT APPLICATION

(11) **EP 3 450 792 A1**
(43) Date of publication of application: **06.03.2019**
(21) Application number: 17188749.0
(22) Date of filing: 31.08.2017
(51) Int. Cl.: F16D 65/092, F16D 55/226

(54) **A DISC BRAKE**

(71) Applicant: Meritor Heavy Vehicle Braking Systems (UK) Limited, Cwmbran, Gwent NP44 3XU (GB)
(72) Inventor: GIBBENS, Peter KERSLAKE, Cwmbran, Gwent NP44 3XU (GB)
(74) Representative: Foot, Paul Matthew James

(57) **Abstract**

A disc brake comprising a brake caliper; an actuation mechanism at least partially accommodated within the caliper; a first brake pad support arrangement configured to be inboard of a brake rotor; and a second brake pad support arrangement configured to be outboard of a brake rotor. The disc brake further comprises at least two brake pads mounted to one or other of the first and second support arrangements.

## Description

### TECHNICAL FIELD

The present invention relates to a disc brake. More particularly, but not exclusively, the present invention relates to an air actuated disc brake.

### BACKGROUND

Disc brakes for use on heavy vehicles such as trucks and buses are provided with one or two pistons (also referred to as tappets) that transmit an actuation force from an actuator to a brake pad, to bring the brake pad into contact with a brake rotor or disc and thereby retard rotation of a wheel associated with the rotor.

Disc brakes with two pistons often have enlarged piston heads, in order to increase the area of the brake pad to which force is applied, to minimise flexing or pivoting of the pad which can lead to uneven wear of the pad friction material. Uneven wear of pad friction material disadvantageously necessitates premature pad replacement. An example of such enlarged piston heads is shown in DE4212352 (Knorr-Bremse).

Disc brakes with one piston tend to be more likely to suffer from uneven pad wear, as the transmission of force via a single, central, piston increases the likelihood of flexing or pivoting of the pad. Various measures have been proposed to address this problem, e.g. a thicker backplate of the brake pad, or backplates with stiffening ribs, to increase the pad's resistance to flexing. An example of such an arrangement is shown in EP2199640 (Meritor HVBS (UK) Limited).

An alternative approach is to use a so-called "spreader plate" between the piston and the brake pad. The spreader plate is resistant to flexing, and, to optimise force transmission, may have features such as a tapering thickness that reduces away from the piston, and a radius at the interface of the piston and the spreader plate. The spreader plate allows a pad with a standard backplate thickness to be used. An example of such an arrangement is shown in US5449052 (Perrot Bremsen).

In such arrangements, the frictionally induced drag load under braking, and any impacts caused by vibration of the pad as the vehicle to which the disc brake is fitted is driven over uneven surfaces, are transmitted directly to a carrier portion of the disc brake. Thus, as well as designing pads with backplates that are resistant to flexing, a further consideration is how well the surfaces of the pads that contact the carrier, and the surfaces of the carrier themselves, resist these impact loads. In some circumstances, the pad backplates may need to be thicker than is required to inhibit flexure, in order that the backplate edge surface area is sufficiently large so as not to damage the backplate and carrier surfaces and edges. Further, backplates may also need to be thicker than required to inhibit flexure so as to ensure there is sufficient overlap with the carrier to prevent the brake pad being ejected from the disc brake via the gaps between the support and the rotor when the rotor and friction material are worn.

It can be costly to manufacture the relatively large area of friction material required for a single brake pad of a heavy vehicle disc brake. Features such as slots may be incorporated into the friction material in order to inhibit cracking of the friction material due to thermal or mechanical effects, increasing manufacturing complexity.

Brake pad friction material is subject to "taper wear", where the leading edge of the inboard pad friction material wears more quickly than the friction material at the trailing edge. This effect is reversed at the outboard pad, where the trailing edge friction material wears more quickly. A single friction material is used across the whole of a pad, to avoid increasing manufacturing complexity. The pad therefore has uniform material properties across the whole of its surface, despite the different wear rates of the leading and trailing edges of the pad friction material.

The present invention seeks to overcome or at least mitigate the problems associated with the prior art.

### SUMMARY OF THE INVENTION

According to an aspect of this invention there is provided a disc brake comprising:
a brake caliper;
an actuation mechanism at least partially accommodated within the brake caliper;
a first brake pad support arrangement configured to be inboard of a brake rotor; and
a second brake pad support arrangement configured to be outboard of a brake rotor;
wherein the disc brake further comprises at least two brake pads mounted to one or other of the first and second support arrangements.

The use of multiple brake pads allows smaller pads to be used to provide the same total swept surface area as a single larger pad. Smaller brake pads may be simpler to manufacture than one, larger, pad, and pad flatness is easier to achieve. Cracking of the friction material is less likely to occur due to the smaller surface area.

The disc brake may comprise a first brake pad and a second brake pad mounted to one or other of the first and second support arrangements, wherein the first pad friction material has a different property to the second pad friction material.

Providing first and second pads with different friction materials allows different properties to be used for the leading pad and the trailing pad, according to the requirements for each pad.

One of the first or second pad friction material may have greater wear resistance than the other of the first or second pad friction material.

Friction material of greater wear resistance can be provided on one of the pads in order to reduce taper wear, so reducing the need for premature pad replacement.

The first and second brake pads may be mounted to the first support arrangement, wherein the first brake pad is a leading pad and the second brake pad is a trailing pad, and wherein the first pad friction material has greater wear resistance than the second pad friction material.

Advantageously, this arrangement may address the issue of taper wear occurring at the leading edge of inboard side friction material.

The first and second brake pads may be mounted to the second support arrangement, wherein the first brake pad is a leading pad and the second pad is a trailing pad, and wherein the second pad friction material has greater wear resistance than the first pad friction material.

Advantageously, this arrangement may address the issue of taper wear occurring at the trailing edge of outboard side friction material.

The actuation mechanism may comprise two pistons.

The first and second brake pads may be mounted to the first support arrangement, and the actuation mechanism may comprise a first piston configured to act directly on the first brake pad, and a second piston configured to act directly on the second brake pad.

The arrangement of a piston acting on each of two brake pads allows load to be applied evenly to each brake pad.

The disc brake may further comprise a brake carrier configured to support the brake caliper.

The brake carrier may comprise the brake pad support arrangement.

The actuation mechanism may comprise a single piston.

The at least two brake pads may be mounted to the first support arrangement, and the disc brake may further comprise a plate configured to transmit actuation force from the actuation mechanism to the brake pads.

The plate spreads the actuation force across the brake pads, so that the load is more evenly applied, and taper wear is reduced.

The plate may comprise the brake pad support arrangement.

Advantageously, the plate can be used to locate and support the brake pads, so that the thickness of brake pad backplates may be reduced, or the backplates omitted entirely without appreciably increasing the risk of pad ejection or the formation of depressions in the abutment surfaces of the brake carrier.

The plate may be integral to the or each piston.

Transmission of force from the piston to the brake pads is improved, and the number of separate components is advantageously decreased.

The plate may comprise a brake pad abutment surface arranged to contact a corresponding surface of one of the brake pads.

The brake pad abutment surface may comprise a portion inclined to the horizontal, preferably a generally vertical portion.

The brake pad abutment surface may comprise a generally horizontal portion.

The brake pad abutment surface provides support to the brake pad or pads, and locates the pads in different directions.

The plate may be arranged to support the brake pads across the entire rear surface of the pads.

This configuration provides maximum spreading of the load across the pads.

The plate may comprise a second brake pad abutment surface arranged to contact a corresponding surface of the other of the brake pads.

The second brake pad abutment surface may comprise a generally vertical portion.

The second brake pad abutment surface may comprise a generally horizontal portion.

The disc brake may comprise at least two brake pads mounted to each of the first and second support arrangements.

The disc brake may comprise a third brake pad and a fourth brake pad mounted to one or other of the first and second support arrangements, wherein the third pad friction material has a different property to the fourth pad friction material.

One of the third or fourth pad friction material may have greater wear resistance than the other of the third or fourth pad friction material.

The first and second brake pads may be mounted to the first support arrangement, wherein the first brake pad is a leading pad and the second brake pad is a trailing pad, and wherein the first pad friction material has greater wear resistance than the second pad friction material, and the third and fourth brake pads may be mounted to the second support arrangement, wherein the third brake pad is a leading pad and the fourth brake pad is a trailing pad, and wherein the fourth pad friction material has greater wear resistance than the third pad friction material.

There is also provided a brake pad arrangement for a disc brake, the brake pad arrangement comprising at least two brake pads configured for location in a shared brake pad support arrangement on an inboard or an outboard side of a brake rotor.

The brake pad arrangement may comprise first and second brake pads, wherein the first pad friction material is different to the second pad friction material.

The first pad friction material may have greater wear resistance than the second pad friction material.

According to another aspect of the invention there is provided a disc brake comprising a brake caliper; an actuation mechanism at least partially accommodated within the brake caliper; a first brake pad support arrangement configured to be inboard of a brake rotor; and a second brake pad support arrangement configured to be outboard of a brake rotor. The disc brake further comprises first and second brake pads mounted side by side in one or other of the first or second brake pad support arrangements, or mounted one above the other in one or other of the first or second brake pad support arrangements.

According to a further aspect of the invention there is provided a disc brake comprising a brake caliper; an actuation mechanism at least partially accommodated within the brake caliper; a first brake pad support arrangement configured to be inboard of a brake rotor; and a second brake pad support arrangement configured to be outboard of a brake rotor. The disc brake further comprises first and second brake pads mounted adjacent one another in one or other of the first or second brake pad support arrangements.

The disc brake of any of the preceding aspects may be an air actuated disc brake.

The disc brake of any of the preceding aspects may be for a heavy vehicle.

### BRIEF DESCRIPTION OF THE DRAWINGS

Figure 1 is an isometric view of an example disc brake;
Figure 2 is a plan view of the disc brake of Figure 1, with a brake rotor in situ;
Figure 3 is an isometric view of the disc brake of Figure 1 from an inboard direction, with the outboard brake pad omitted for clarity;
Figure 4 is an isometric view of the disc brake of Figure 1 from an inboard direction, with the outboard brake pad and a caliper housing of the disc brake omitted for clarity;
Figure 5 is an isometric view showing an actuator arrangement of the disc brake of Figure 1;
Figure 6 is an isometric view of a disc brake according to an embodiment of the present invention viewed from an outboard direction;
Figure 7 is an isometric view of the disc brake of Figure 6, with part of a caliper housing of the disc brake omitted for clarity;
Figure 8 is a plan view of a disc brake according to a second embodiment of the invention;
Figure 9a is an isometric view of a spreader plate of a disc brake according to an embodiment of the invention;
Figure 9b is a further isometric view of the plate of Figure 9a;
Figure 10a is an isometric view of a spreader plate according to a further embodiment of the invention; and
Figure 10b is a further isometric view of the plate of Figure 10a.

### DETAILED DESCRIPTION

### Actuation

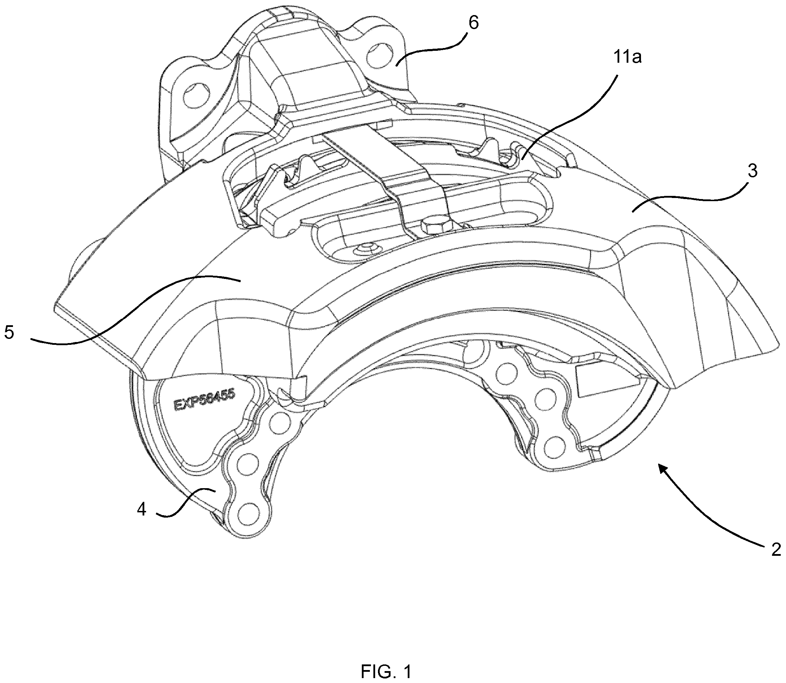

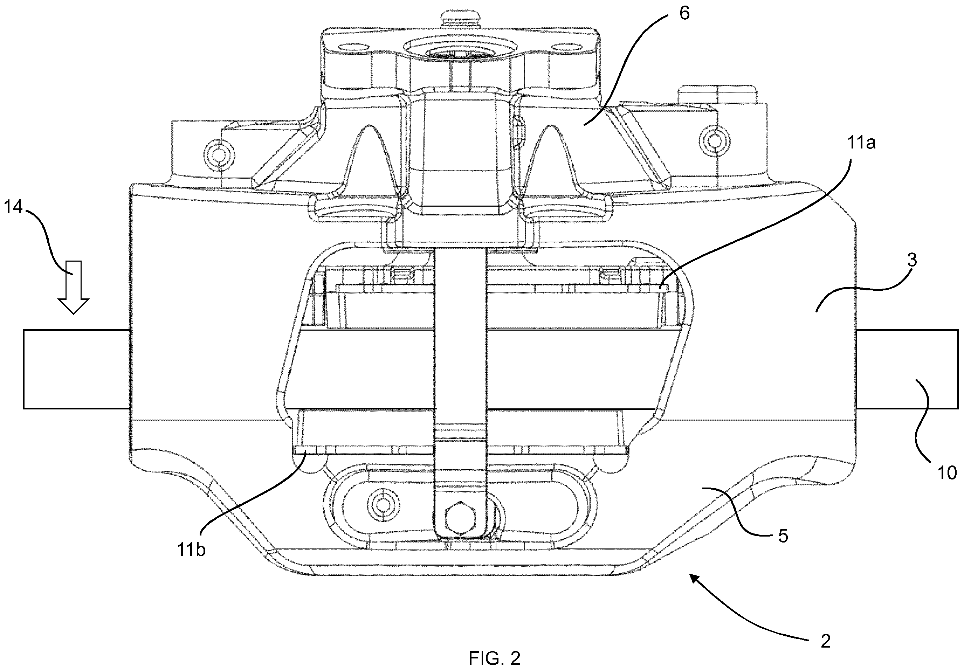

Figures 1 to 5 illustrate an example of a disc brake 2 of a type that may be adapted to incorporate the present invention. The Figures and associated description below are included to explain the function of the actuation mechanism. The disc brake 2 incorporates an actuating mechanism comprising a single piston and is suitable for use on heavy commercial vehicles. This type of disc brake is particularly, but not exclusively, suitable for lighter duty heavy vehicles, for example smaller trucks, or a trailer of a tractor-trailer combination.

Various orientations of the disc brake are described. In particular the directions inboard and outboard refer to the typical orientation of the disc brake when fitted to a vehicle. In this orientation, the brake pad closest to the centre of the vehicle is the brake pad directly actuated by an actuation mechanism, and being the inboard brake pad, and the outboard brake pad being the brake pad mounted to a bridge or frame portion of the caliper. Thus inboard can be equated with an actuating side of the disc brake, and outboard with a reaction side. The terms radial, circumferential, tangential and chordal describe orientations with respect to the brake rotor. The terms vertical and horizontal describe orientations with the disc brake mounted uppermost on an axle, though it will be appreciated that in use such a disc brake may adopt any axle orientation depending upon packaging requirements of the vehicle.

The disc brake 2 comprises a caliper 3 having a housing 6 to accommodate the actuation mechanism, and which is slidably mounted on a carrier 4 for movement in an inboard-outboard direction.

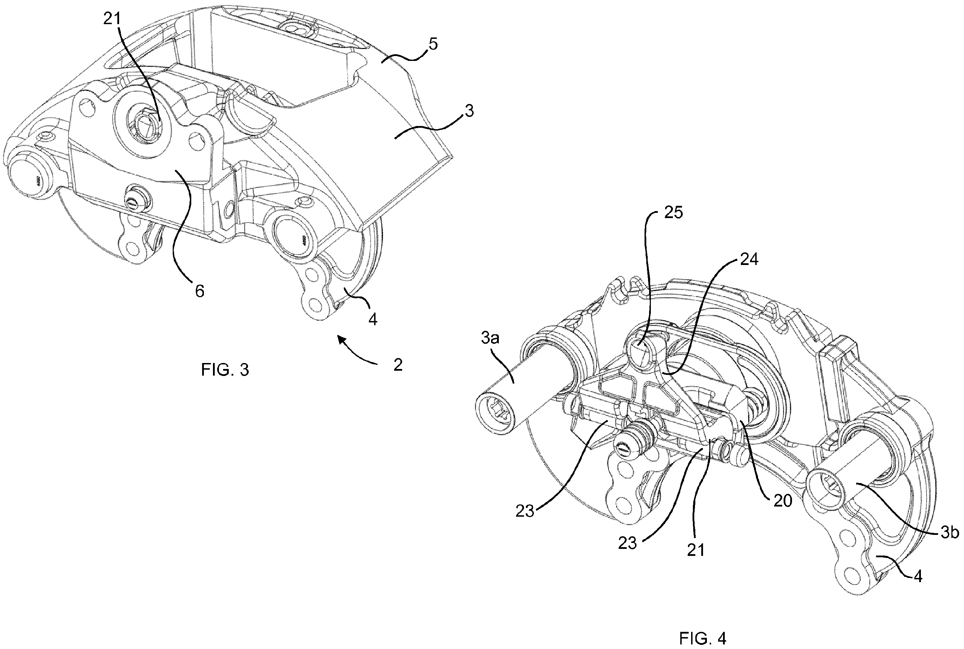

As can be seen best from the view in Figure 4 with the housing 6 omitted, the caliper 3 can slide on the carrier 4, by way of first and second support pins 3a, 3b. In this embodiment, the first support pin 3a is longer than the second support pin 3b.

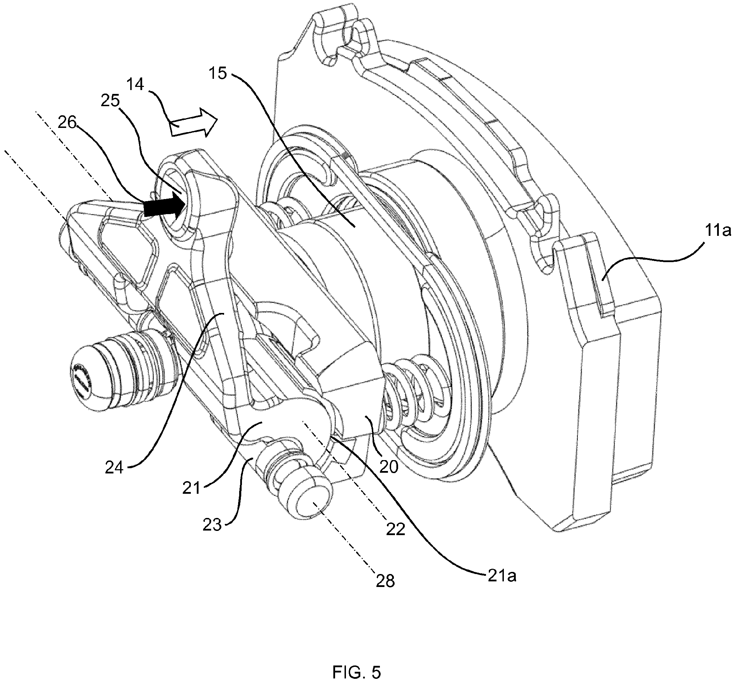

With reference to the cut-away view of Figure 5 in particular, the inboard actuation mechanism comprises a single brake piston 15, slideable in the direction of arrow 14 (i.e. inboard-outboard) relative to the rotor 10 (not shown in Figure 5, for clarity).

In order to urge the piston assembly in the direction of arrow 14, the operating shaft 21 is pivoted about rollers 23 which are located along a transverse axis 28. In this embodiment, there are two rollers 23, which are spaced from one another circumferentially. Each roller 23 is located on a single bearing surface (not shown), each bearing surface being curved to accept the roller 23. Convex surfaces 21a of the operating shaft 21 are located opposite the roller 23. The operating shaft has an axis 22, being the radial centre of the arc defined by surfaces 21a, which is parallel and offset from the axis 28. The curved surface 21a locates in a semi-circular recess of a yoke 20. A surface of the yoke 20 opposite the recess is in contact with an inboard end face of the piston 15. The operating shaft 21 further comprises a lever 24 having a pocket 25 adapted to receive an output push rod (not shown) of a brake actuator (e.g. an air chamber). The lever 24 is, in this embodiment, shaped as an inverted "U" (see Figure 4 in particular) and the line of action of the brake actuator (from pocket 25) is substantially over the line of action of the piston 15.

In other embodiments, another form of cam surface instead of the curved surface 21a of the operating shaft 21 may be employed (e.g. a plain bearing) and/or the arrangement may be reversed with the rollers 23 being in contact with the yoke 20, and the curved surface 21a being located in the recess of the caliper housing 6.

Application of a force in the direction of arrow 26 (Figure 5) causes pivoting movement of the operating shaft 21 about the rollers 23, and the curved surface 21a bears on the yoke 20. The offset axes 28 and 22 cause the yoke 20 to move in the direction of the piston 15, contacting the piston 15 and causing the piston 15 to urge the friction material of an inboard brake pad 11a directly against the rotor 10. A reaction force from the operating shaft 21 is transmitted to the bearing surface of the caliper 3 via the rollers 23 and is then transmitted to an outboard brake pad 11b via the bridge 5, with the friction material of the outboard pad being urged against the rotor 10, such that the brake pads clamp the rotor and effect braking through a frictional brake force.

### Dual brake pads

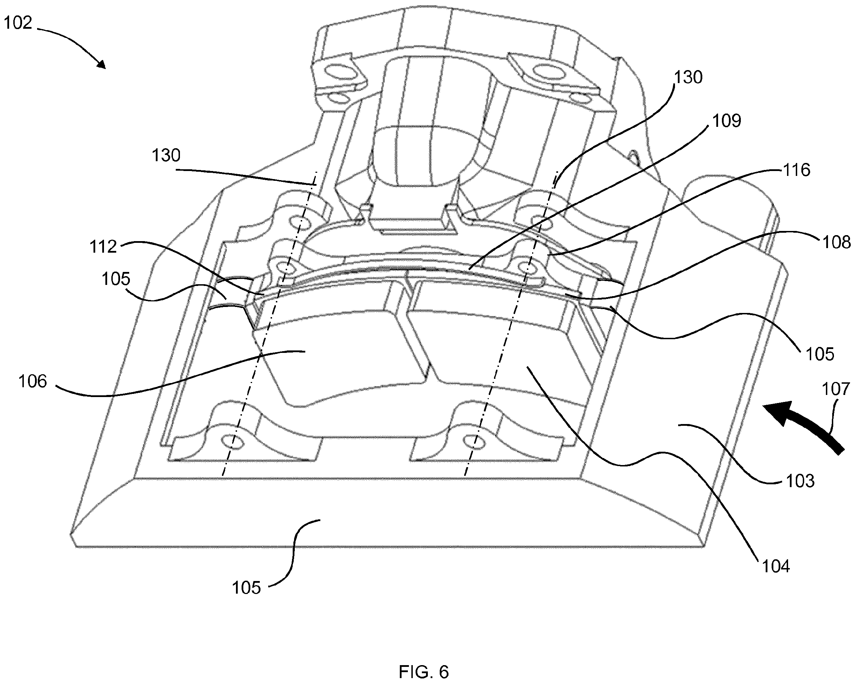

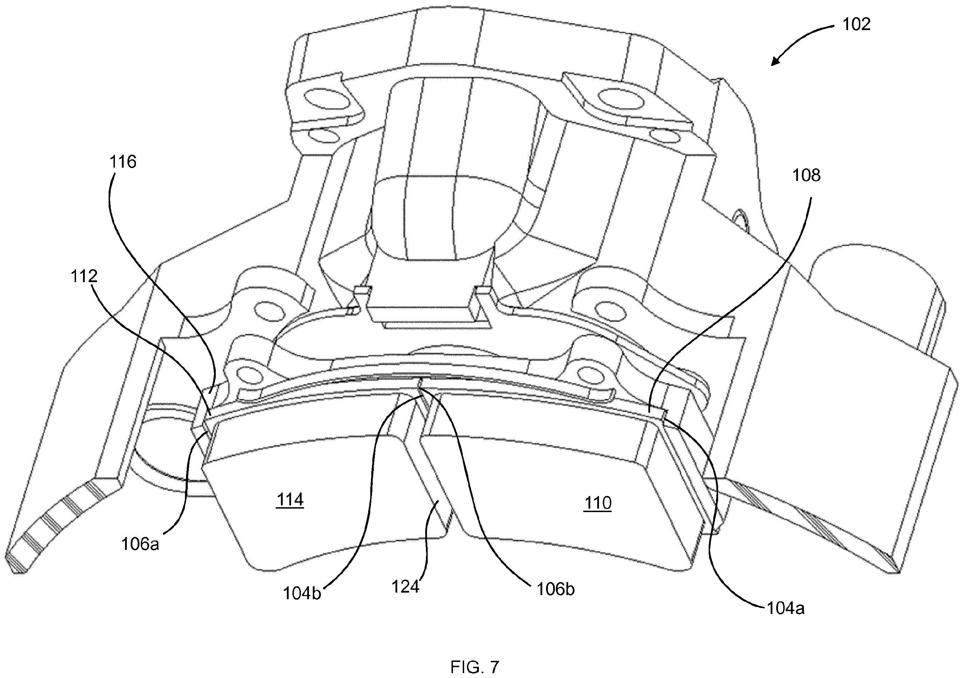

Referring now to Figures 6 and 7, a disc brake according to an embodiment of the invention is indicated generally at 102. The disc brake 102 of this embodiment is similar to the example described above, and in particular is actuated in the manner described above. However, in this embodiment, instead of the single inboard brake pad described above and shown in Figures 1 to 5, first and second separate inboard brake pads 104, 106 are provided. The first pad 104 is on the right (looking at Figure 6), and acts as the leading pad. The second pad 106 is on the left, and acts as the trailing pad, in relation to the direction 107 a rotor will rotate during the usual (forward) direction of travel of a vehicle (not shown).

The first pad 104 comprises a backplate 108 and friction material 110 that is attached to the backplate 108, as shown in Figure 7. The second pad 106 comprises a backplate 112 and friction material 114 that is attached to the backplate 112. The backplates 108 and 112 are stamped or cast from a suitable metal such as steel to have a suitable strength for support of the friction material.

In this embodiment the first brake pad 104 and second brake pad 106 have the same swept area of friction material and are in effect a mirror image of each other. However, in other embodiments, the first and second brake pads are asymmetrical, and have different swept areas of friction material. For example, the first and second brake pads are in some embodiments asymmetrical about a radial centreline of the brake pads, set midway between the circumferential edges of the brake pads.

Both the first and second brake pads 104, 106 are mounted on a shared brake pad support arrangement. In this embodiment, the brake pad support arrangement is a spreader plate 116. As well as locating and supporting the first and second pads 104, 106, the spreader plate 116 engages surfaces of a brake carrier 105.

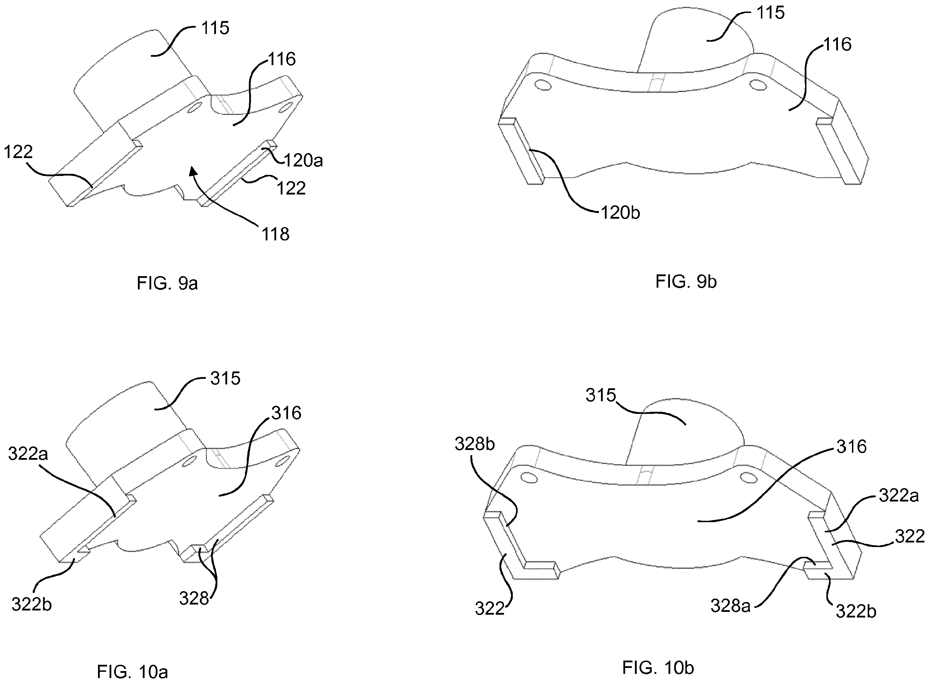

The backplates 108, 112 of the first and second brake pads 104, 106 are configured to fit adjacent to one another in an opening 118 of the spreader plate 116 (see Figures 9a and 9b, where the spreader plate is shown in isolation). The brake pads 104, 106 are held in place by a pad spring 109 extending along the backplates 108, 112. Support pins extending through apertures in the spreader plate 116 and the brake caliper 103 are schematically indicated on Figure 6 by axes 130. The support pins support the ends of the spring 109, and so retain the brake pads 104, 106 in place on the spreader plate 116, in conjunction with abutment surfaces of the spreader plate 116 described below. In other embodiments the support pin arrangement is not necessary, and an alternative arrangement is provided to guide the brake pads during actuation of the brake.

In an alternative embodiment a strap or straps are used to retain the pads. A central strap in combination with a pad spring can be used, or two straps, one extending over each brake pad. In other embodiments, the pad spring may not be required.

The first brake pad 104 has a circumferentially outer surface 104a and a circumferentially inner surface 104b. The second brake pad 106 has a circumferentially outer surface 106a and a circumferentially inner surface 106b. When the brake pads 104, 106 are located in the opening 118 of the spreader plate, the circumferentially inner surfaces 104b, 106b engage one another. The circumferentially outer surfaces 104a, 106a of the first and second brake pads 104, 106 engage corresponding vertical abutment surfaces 120a, 120b (see Figures 9a and 9b) of side steps 122 of the spreader plate 116. In this embodiment, the circumferentially inner and circumferentially outer surfaces 104b, 106b, 104a, 106a are surfaces of the backplates 108, 112.

As can be seen from Figure 7, when the first and second brake pads 104, 106 are located in the opening 118 of the spreader plate 116, the friction material 110 of the first brake pad 104 does not contact the friction material 114 of the second brake pad 106; there is a radial channel 124 defined between the friction material 110 of the first brake pad 104, and the friction material 114 of the second brake pad 106.

When the disc brake 102 is actuated, and the spreader plate 116 is moved towards the rotor by the actuation mechanism, the friction material 110, 114 of the first and second brake pads 104, 106 contacts the rotor, to retard rotation of the wheel. As the brake pads 104, 106 contact the rotor, a drag force acts on the brake pads 104, 106 in a circumferential direction. The force transmission path is from the friction material 110 of the first brake pad 104 (as it is the leading brake pad), through the circumferentially inner surface 104b of the first brake pad 104 to the circumferentially inner surface 106b of the trailing second brake pad 106, and then through the circumferentially outer surface 106a of the second brake pad 106 and to the vertical abutment surface 120b of the spreader plate 116. Force will also pass directly from the friction material 114 of the second brake pad 106 to the outer surface 106a of the second brake pad 106. The spreader plate 116 is configured to transmit substantially the entire braking induced torque load that would otherwise conventionally be transmitted directly from a brake pad to the carrier 105.

As the braking forces are reacted directly by the spreader plate 116, this arrangement allows for thinner backplates (e.g. 5mm or less, or potentially 3mm or less as opposed to 8mm or more as is conventional for heavy vehicles) to be used compared to brake pads of the prior art. This means that less material is needed for manufacture, which has cost and environmental benefits. Further, manufacturing two separate inboard brake pads rather than one large single brake pad may result in further cost savings. It is also easier to maintain the brake pad flatness during processing of the brake pad for smaller separate brake pads compared to a larger single brake pad. Cracking of the friction material due to thermal or mechanical effects is less likely, so that slot features to address cracking may not be required, and complexity of manufacture is reduced. As the brake pads are held by the spreader plate 116 the risk of the thinner backplate forming depressions in the abutment surfaces of the carrier 105 are mitigated. Holding the brake pads in the spreader plate 116 also reduces the risk of ejection of the brake pads via the gap between the carrier and the rotor as the spreader plate is thicker than the backplate of the brake pads, supports the backplates, and itself is supported by the carrier 105.

Having separate brake pads also enables different friction materials to be used on each brake pad. This can help reduce so called 'taper wear', where the leading edge of a conventional brake pad wears quicker than its trailing edge. In this case, the friction material 110 of the first brake pad 104 may be made from a more wear resistant material than the friction material 114 of the second brake pad 106, resulting in the two brake pads wearing at a more even rate.

In this embodiment, two individual brake pads are also used at the outboard side of the disc brake 102. First and second outboard side brake pads (not shown) are supported in a further brake pad support arrangement provided by an opening in the bridge 105 of the caliper 103. Generally vertical abutment surfaces of the opening react the forces from the outboard brake pads 104, 106 in use.

At the outboard side of the disc brake 102, taper wear typically reverses compared to the inboard side. Therefore, in this case, the outboard trailing brake pad has friction material of higher wear resistance than the leading brake pad, so that the brake pads wear at a generally even rate.

The first and second brake pads of other embodiments have alternative differing properties, such as temperature resistance, friction coefficient, desired noise, vibration and harshness (NVH) properties, squeal resistance and/or compressibility.

In an alternative embodiment, the disc brake has first and second inboard brake pads, and a single outboard brake pad. In a further alternative embodiment, the disc brake has first and second outboard brake pads, and a single inboard brake pad.

In an alternative embodiment, the disc brake has more than two inboard and/or outboard brake pads.

In this embodiment, friction element retaining members, also known as pad straps, may be required to retain the inboard and outboard brake pads.

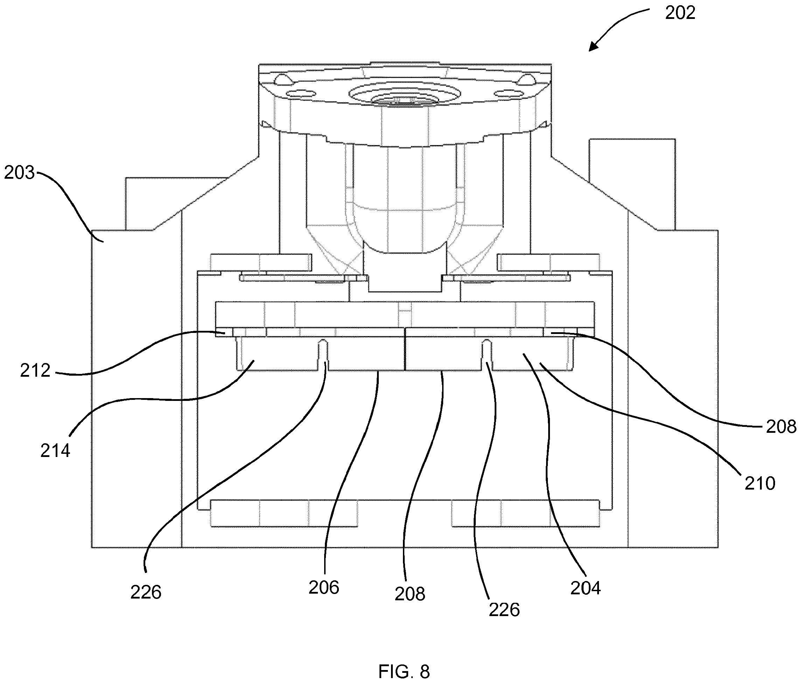

A further embodiment of the invention is shown in Figure 8, where features substantially the same as those of the previous embodiment are given corresponding reference numbers with the prefix "2".

The disc brake 202 shown in Figure 8 has first and second inboard brake pads 204, 206 that differ from those of the previous embodiment. The friction material 210, 214 of each of the first and second brake pads 204, 206 defines a substantially vertically extending slot 226. The slots 226 inhibit cracking of the friction material due to thermal or mechanical effects.

As shown in Figure 8, the friction material 210, 214 of the brake pads 204, 206 is adjacent, rather than being separated by a channel as in the previous embodiment. The adjacent friction material improves transfer of load from the leading brake pad 204 to the trailing brake pad 206.

The disc brake 202 of this embodiment has outboard brake pads (not shown) also having friction material defining a substantially vertical slot.

A further embodiment of the spreader plate of the invention is shown in Figures 10a and 10b, where features substantially the same as those of the previous embodiment are given corresponding reference numbers with the prefix "3".

Figures 10a and 10b show the spreader plate 316 with an alternative arrangement of side steps 322 providing abutment surfaces for the inboard brake pads. The side steps 322 are substantially L-shaped, with a generally vertical portion 322a and a generally horizontal portion 322b. The horizontal portions 322b extend circumferentially inwardly towards one another across the plate 316. The side steps 322 thus provide a brake pad abutment surface 328 having a generally vertical portion 328a and a generally horizontal portion 328b. Such an arrangement locates the brake pads in horizontal and vertical directions but still allows fitting in a solely radially inward direction, and may further reduce the risk of pad ejection and carrier abutment pitting issues.

Either spreader 116, 316 can be used with the disc brake 102, 202 of either of the embodiments shown in Figures 6 to 8. In both illustrated embodiments, the spreader plate 116, 316 is integral to a piston 115, 315. In an alternative embodiment, the spreader plate is separate to the piston. In an alternative embodiment, the brake actuation mechanism has two pistons. The two pistons are integral to the spreader plate. In a further embodiment where the brake actuation mechanism has two pistons, the pistons are separate to the spreader plate.

In an alternative embodiment, the brake pad support arrangement is the brake carrier. In such an embodiment, the brake actuation mechanism has a single or two pistons. A spreader plate can be used in such an embodiment to evenly distribute load between the two brake pads, with the spreader plate being supported in the carrier. Alternatively, no spreader plate is used, and the piston or pistons act directly on the backplates of the brake pads. In one alternative embodiment, the brake actuation mechanism has two pistons with equal piston travel, and no spreader plate is used. In this embodiment, each piston acts on one of the inboard brake pads. The actuation force is thus evenly split, and taper wear is reduced. In a further alternative embodiment, the backplate of each brake pad has a formation comprising a lug or lugs extending therefrom away from the friction material that fit to a corresponding slot or recess in the spreader plate, instead of, or in addition to the steps 122, 322 in order to mount the brake pads to the spreader plate.

It will be appreciated that numerous changes may be made within the scope of the present invention. For example, certain aspects of the invention may be applicable to other types of disc brake, such as electromechanically actuated brakes.

## Claims

1. A disc brake comprising:
a brake caliper;
an actuation mechanism at least partially accommodated within the brake caliper;
a first brake pad support arrangement configured to be inboard of a brake rotor; and
a second brake pad support arrangement configured to be outboard of a brake rotor;
wherein the disc brake further comprises at least two brake pads mounted to one or other of the first and second support arrangements.

2. A disc brake according to claim 1 comprising a first brake pad and a second brake pad mounted to one or other of the first and second support arrangements, wherein the first pad friction material has a different property to the second pad friction material.

3. A disc brake according to claim 2 wherein one of the first or second pad friction material has greater wear resistance than the other of the first or second pad friction material.

4. A disc brake according to claim 3 wherein the first and second brake pads are mounted to the first support arrangement, wherein the first brake pad is a leading pad and the second brake pad is a trailing pad, and wherein the first pad friction material has greater wear resistance than the second pad friction material.

5. A disc brake according to claim 3 wherein the first and second brake pads are mounted to the second support arrangement, wherein the first brake pad is a leading pad and the second pad is a trailing pad, and wherein the second pad friction material has greater wear resistance than the first pad friction material.

6. A disc brake according to any preceding claim wherein the actuation mechanism comprises two pistons.

7. A disc brake according to claim 6 wherein the first and second brake pads are mounted to the first support arrangement, and wherein the actuation mechanism comprises a first piston configured to act directly on the first brake pad, and a second piston configured to act directly on the second brake pad.

8. A disc brake according to any preceding claim further comprising a brake carrier configured to support the brake caliper, preferably wherein the brake carrier comprises the brake pad support arrangement.

9. A disc brake according to any one of claims 1 to 5 wherein the actuation mechanism comprises a single piston.

10. A disc brake according to any preceding claim wherein the at least two brake pads are mounted to the first support arrangement, and further comprising a plate configured to transmit actuation force from the actuation mechanism to the brake pads, preferably wherein the plate comprises the brake pad support arrangement.

11. A disc brake according to claim 10 wherein the plate is integral to the or each piston.

12. A disc brake according to claim 10 or claim 11 wherein the plate comprises a brake pad abutment surface arranged to contact a corresponding surface of one of the brake pads, preferably wherein the brake pad abutment surface comprises a portion inclined to the horizontal, preferably a generally vertical portion, and/or wherein the brake pad abutment surface comprises a generally horizontal portion.

13. A disc brake according to any one of claims 10 to 12 wherein the plate is arranged to support the brake pads across the entire rear surface of the pads.

14. A brake pad arrangement for a disc brake, the brake pad arrangement comprising at least two brake pads configured for location in a shared brake pad support arrangement on an inboard or an outboard side of a brake rotor.

15. A brake pad arrangement according to claim 14 comprising first and second brake pads, wherein the first pad friction material is different to the second pad friction material, preferably wherein the first pad friction material has greater wear resistance than the second pad friction material.
